# EUROPEAN PATENT APPLICATION

(11) **EP 4 618 448 A1**
(43) Date of publication of application: **17.09.2025**
(21) Application number: 25163760.9
(22) Date of filing: 14.03.2025
(51) Int. Cl.: H04B 17/00, H04B 17/17, H04B 17/29

(54) **TWO-PORT PASSIVE INTERMODULATION ANALYZER TO CLASSIFY INTERFERENCE SIGNALS AND IDENTIFY LIKELY SOURCES**

(30) Priority: 15.03.2024 US 202463565786 P
(71) Applicant: ECSite, Inc., Santa Clara, CA 95054 (US)
(72) Inventor: TAYLOR, Mike, SANTA CLARA, CA95054 (US)
(74) Representative: Serjeants LLP

(57) **Abstract**

Systems and methods of passive intermodulation (PIM) detection in a radio frequency (RF) system including: injecting, from each port of a two-port PIM analyzer, two test tones or a wideband modulated carrier signal into the system one port at a time; receiving, at each port, a response signal from the system in response to the test tones or wideband modulated carrier signal; injecting, from two ports of the two-port PIM analyzer, test tones or a wideband modulated carrier signal into the system; receiving, at the two ports, a response signal from the system in response to the test tones or wideband modulated carrier signal; and identifying one or more PIM sources based on the response signals.

## Description

### CROSS-REFERENCE TO RELATED APPLICATIONS

The present application claims priority to U.S. Provisional Application Serial No. 63/565,786 filed on March 15, 2024, the disclosure of which is incorporated by reference herein in its entirety.

### FIELD

The present invention relates to passive intermodulation (PIM) detection, classification, and mitigation in wireless communication systems, such as for example, in multiple-input multiple-output (MIMO) antenna systems, multiple frequency systems, and distributed antenna systems (DAS). More specifically, the invention pertains to methods and systems for differentiating between internally and externally generated PIM sources, utilizing Distance-to-PIM (DTP) measurements, including 1-Port and 2-Port DTP traces, to accurately localize and characterize PIM sources.

### BACKGROUND

Passive intermodulation (PIM) interference is a nonlinear phenomenon that occurs when multiple radio frequency (RF) signals mix at passive components within a transmission system, generating unwanted intermodulation (IM) products. These passive components can include connectors, cables, antennas, or even structural elements within a communication infrastructure. PIM is particularly problematic in wireless communication systems where it can degrade signal quality, reduce network capacity, and increase noise floor.

PIM interference can arise when two or more high-power signals encounter material imperfections, junctions, or oxidation in passive components, leading to nonlinear interactions. The resulting intermodulation products often fall within the operating frequency bands of the system, causing in-band interference that disrupts signal reception. Unlike active intermodulation, which originates from active electronic components, PIM is a passive phenomenon but can be just as detrimental.

With the increasing deployment of high-density cellular networks, including 4G LTE and 5G systems, PIM has become a significant concern due to its impact on network performance and efficiency. Conventional mitigation approaches include high-quality component design, improved material selection, and optimized installation practices. However, as wireless networks continue to evolve, novel techniques for detecting, predicting, and mitigating PIM interference are required to maintain signal integrity and system reliability.

### BRIEF DESCRIPTION

Aspects and advantages of the invention in accordance with the present disclosure will be set forth in part in the following description, or may be obvious from the description, or may be learned through practice of the technology.

In accordance with one embodiment, a method of passive intermodulation (PIM) detection in a radio frequency (RF) system is provided. The method includes injecting, from each port of a two-port PIM analyzer, two test tones or a wideband modulated carrier signal into the system one port at a time; receiving, at each port, a signal from the system in response to the test tones or wideband modulated carrier signal; and identifying one or more PIM sources based on the response signals. Subsequent to injection of signals from individual ports, one tone is injected from one port and another tone is injected from the second port; response signals received on both ports; and identifying one or more PIM sources based on the response signals. Using the combined responses from one port and two port measurements to determine internal versus external PIM sources.

Identifying the one or more PIM signals may comprise comparing localized peaks of the first and second signals to one or more predefined PIM signal identification thresholds.

The test tones may each comprise two distinct RF test signals at specified frequencies.

Identifying the one or more PIM sources may comprise: identifying PIM signals in the signals that occur at distinct distances (DTP) within the system, grouping PIM signals that originate from similar distances, and associating grouped PIM signals to a common PIM source if the DTP of the grouped PIM signals falls within a predefined distance difference threshold.

The method may further comprise analyzing sets of test cases to classify PIM sources as internal to the system or external to the system. Analyzing the sets of test cases may comprise identifying aspects of the response signals.

The system may comprise multiple branches. The test cases may include a first injection of test tones into one of the two branches and a second injection of test tones into both of the two branches.

Injecting the test tones or wideband modulated carrier signal may be performed from a same access point location.

One-port injection may establish a baseline for internal and external PIM, and two-port injection may confirm and isolate external PIM sources, for example.

The method may further comprise referencing a table associated with each component within the system and identifying probable PIM sources by comparing a distance to PIM (DTP) value against a recorded electrical distance of the component.

Injecting the test tones and receiving the response signals may comprise a first round of testing. The method may further comprise dynamically determining whether another round of testing is necessary.

Prior to injecting the test tones, the method may comprise configuring test parameters including at least one of selecting between a sequence of test execution, a number of test rounds, a target confidence level for PIM detection, and MIMO paths and antenna systems to include in the test procedures.

The RF system may be a multiple-input multiple output (MIMO) system, for example.

Identifying the one or more PIM sources may comprise determining a most likely source of external PIM interference.

In accordance with another embodiment, a method of passive intermodulation (PIM) detection in a radio frequency (RF) system is provided. The method includes operatively connecting a two-port analyzer to a multiple-input multiple-output (MIMO) system; configuring test parameters for testing the MIMO system using the two-port analyzer; testing the MIMO system by injecting a series of test tones into the MIMO system and receiving PIM signals generated because of injecting the test tones into the MIMO system, wherein at least one of the series of test tones is a single-port test and at least one of the series of test tones is a two-port test; determining whether another round of testing is necessary; and upon no further round of testing being necessary, characterizing PIM signals received from the MIMO system to determine presence of a PIM source.

In accordance with another embodiment, a system for passive intermodulation (PIM) detection in a radio frequency (RF) system is provided. The system includes a two-port test analyzer comprising two ports each configured to be coupled to the RF system to permit injection of test tones into the RF system, wherein the test analyzer is configured to: inject, from a each port of the two-port test analyzer, a first set of test tones or a wideband modulated carrier signal into the RF system one port at a time; receive, at each port, a response signal from the RF system in response to the first set of test tones or wideband modulated carrier signal; inject, from two ports of the two-port test analyzer, a second set of test tones or a wideband modulated carrier signal into the RF system; receive, at the two ports, a response signal from the RF system in response to the second set of test tones or wideband modulated carrier signal; and identifying one or more PIM sources based on the response signals.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a schematic of an internal PIM within a system in accordance with embodiments of the present disclosure;
FIG. 2 is a schematic of an external PIM within a system in accordance with embodiments of the present disclosure;
FIG. 3 is a schematic of internal and external PIMs within a system in accordance with embodiments of the present disclosure;
FIG. 4 is a flowchart of a method of identifying PIM within a system and mitigating PIM in accordance with embodiments of the present disclosure;
FIG. 5 illustrates the use of 1-Port DTP measurements in a MIMO antenna system to determine whether detected PIM signals are internally or externally generated and to identify the most probable components responsible for PIM generation in accordance with embodiments of the present disclosure;
FIGS. 6 and 7 illustrate the use of 2-Port DTP measurements in the MIMO antenna system to determine whether detected PIM signals are internally or externally generated and to identify the most probable components responsible for PIM generation in accordance with embodiments of the present disclosure;
FIG. 8 illustrates the use of 1-Port DTP measurements in the MIMO antenna system to determine whether detected PIM signals are internally or externally generated and to identify the most probable components responsible for PIM generation in accordance with embodiments of the present disclosure;
FIG. 9 is a DTP trace of the MIMO antenna system in accordance with embodiments of the present disclosure; and

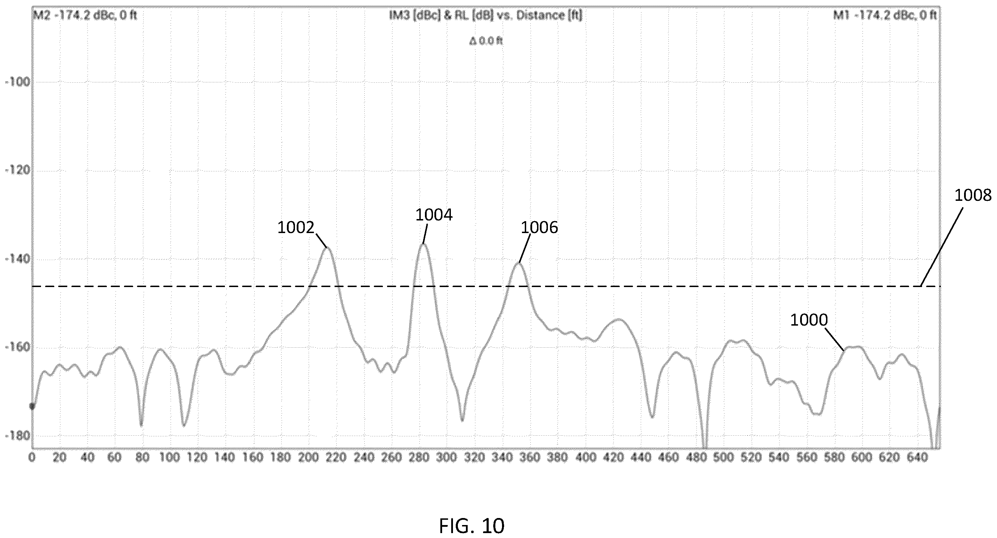

FIG. 10 is a DTP trace of the MIMO antenna system in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

As used herein, DTP refers to Distance To PIM. DTP refers to a measurement from PIM test equipment that identifies one or more unique PIM signals and the distance/delay from the test point to each PIM signal. As used herein, Intermodulation (IM) Product refers to a radio frequency signal that is produced when energy from multiple narrowband signals or one or more wideband signals encounter a non-linear junction. This produces intermodulation products, which is RF energy at frequencies other than that of the source signals (see definition below). The PIM is harmonically related to the source signals. As used herein, internal PIM may refer to IM Products produced within the RF Feedline and Antenna system. As used herein, external PIM may refer to IM products produced in PIM sources where the source signal energy is delivered to the PIM source after the source signals are radiated from the antenna(s). As used herein, MIMO may refer to Multiple Input-Multiple Output. Any specific reference made herein to a MIMO system is not intended to be limited exclusively for MIMO systems. Other applications can include, for example distributed antenna systems (DAS), small cell networks, cell towers with multiple frequencies, different scale MIMO configurations, satellite communication systems, radar systems, RF-over-fiber networks, and high-frequency millimeter-wave deployments.

A radio sector or site may use more than one radio and antenna system to increase capacity. Antenna systems may be duplicates of each other, each serving a different TXRX (transmit/receive) radio but utilizing the same radio channel. As used herein, source signal may refer to one or more RF signals that encounter a non-linear junction and which produce IM products. As used herein, a PIM Signal may refer to the intermodulation-frequency RF energy returned to the source system from the PIM sources. As used herein, a PIM Source may refer to any non-linear junction that produces an IM product. Examples are metallic objects in loose contact with each other, or non-linear materials such as semiconductors. Classic PIM sources are oxidized steel items near the antennas-hence PIM's informal nickname as the "Rusty Bolt Problem." As used herein, DAS may refer to a Distributed Antenna System. A transmitter/receiver is connected to multiple antennas, often though a passive RF distribution system.

Where not otherwise described, systems and components described herein can perform processing and analysis using one or more processors. The processor(s) can include any suitable processing device (e.g., a control circuitry, a processor core, a microprocessor, an application specific integrated circuit, a field programmable gate array, a controller, a microcontroller, etc.) and can be one processor or a plurality of processors that are operatively connected. The memory can include one or more non-transitory computer-readable storage media, such as RAM, ROM, EEPROM, EPROM, one or more memory devices, flash memory devices, etc., and combinations thereof. The memory can store information that can be accessed by the processor(s). For instance, the memory (e.g., one or more non-transitory computer-readable storage mediums, memory devices) can include computer-readable instructions that can be executed by the processor(s). The instructions can be software, firmware, or both written in any suitable programming language or can be implemented in firmware or hardware. Additionally, or alternatively, the instructions can be executed in logically and/or virtually separate threads on processor(s). For example, the memory can store instructions that when executed by the processor(s) cause the processor(s) to perform operations such as any of the operations and functions as described herein.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, Passive Intermodulation (PIM) products can cause interference to RF (Radio Frequency) communications signals. For example, PIM signals can originate in RF feed systems that connect transmitter(s) to one or more antennas, or in objects not part of an antenna RF feed system, or in the antennas themselves, such as passive or active non-linear sources in proximity to the transmitter antennas. A one-port PIM analyzer transmits two source signals from a single RF port, then detects and measures the power of any resultant PIM products back into that same port. A two-port PIM analyzer transmits each of the two PIM source signals separately into two different RF ports, then measures the PIM products on the same two RF ports.

Embodiments described herein provide ways to utilize a combination of multiple one-port and two-port PIM measurements to accurately detect PIM and categorize the detected PIM products as occurring from internal vs. external PIM products. Embodiments described herein may further provide methods to identify the location of the PIM source either within the antenna RF feed system, or externally in proximity of the antenna(s). These methods may be applicable to any RF communications system utilizing one or more antennas, which is common in MIMO (multiple-input multiple-output) systems.

Embodiments described herein are directed to classifying PIM signals as either internal or external PIM. This may be important as the methods, techniques, materials, and skill sets needed to mitigate external and internal PIM are very different from one another. Internal PIM arises from non-linearities within system components (e.g., connectors, cables, or antennas), often requiring hardware improvements, better material selection, and precise assembly techniques for mitigation. External PIM, on the other hand, originates from environmental factors such as rusty metal objects or loose mechanical connections near the antenna, necessitating site inspections, environmental modifications, and/or external shielding. Because internal PIM is addressed through controlled engineering practices and component quality, while external PIM requires field-based troubleshooting and environmental control, their mitigation strategies are fundamentally different.

PIM is also highly variable over time, with large fluctuations in magnitude often occurring over short time periods. These fluctuations can result from a variety of factors, including temperature variations, vibrations, system aging, and fluctuating load conditions in the RF environment. For example, thermal expansion and contraction of metal components can cause changes in contact resistance at junctions, altering the nonlinear characteristics that contribute to PIM generation. Similarly, mechanical stress from wind, vibrations from nearby construction, or even slight movements in connectors due to thermal cycling can create transient changes in PIM levels. Due to this temporal variability, a single measurement for PIM is often insufficient to fully characterize its behavior or even detect its presence. In many cases, PIM signals exhibit an intermittent nature, appearing only under specific RF loading conditions or environmental states. Traditional measurement techniques, which often rely on short-duration tests at fixed power levels, may fail to capture these transient occurrences, leading to an incomplete assessment of PIM's impact on system performance.

Determining whether the PIM source originates within the RF feed system to the antenna (internal PIM) or arises from external, non-physically connected structures (external PIM) is critical for effective mitigation. Internal PIM occurs within the transmission path, including components such as coaxial cables, connectors, antennas, and duplexers, where non-ideal electrical contacts, corrosion, or material imperfections can generate nonlinearities leading to intermodulation products. In contrast, external PIM results from interactions between transmitted RF signals and nearby conductive objects that exhibit nonlinear characteristics, such as metallic structures, fasteners, fences, or corroded surfaces within the vicinity of the antenna.

Once the PIM source is classified, appropriate mitigation strategies can be deployed. Internal PIM may be reduced by optimizing connector torquing, replacing degraded components, or using high-purity materials with improved contact surfaces. External PIM mitigation may require repositioning the antenna, modifying nearby structures, or applying RF absorptive materials to suppress nonlinear interactions. The ability to distinguish and address internal versus external PIM effectively enhances network performance, reduces interference-related capacity losses, and ensures compliance with stringent spectral efficiency requirements in modern communication systems.

In an embodiment, the systems and methods described herein may be utilized in cellular communication systems, which typically operate with multiple transmit and receive channels distributed across a range of frequency bands. These systems are designed to support high-capacity, high-reliability communication in a variety of deployment environments, necessitating advanced interference mitigation strategies to ensure optimal performance. The complexity of modern cellular networks, particularly with the deployment of multiple-input multiple-output (MIMO) technology, carrier aggregation, and dynamic spectrum allocation, increases the susceptibility to PIM interference. Effective PIM detection and mitigation techniques are therefore essential for maintaining signal integrity and network efficiency.

Cellular communication systems can be broadly categorized into two primary types of radio systems: (1) macro cells and (2) Distributed Antenna Systems (DAS). Macro cells may represent traditional large-scale cellular sites where each MIMO branch of a transceiver is connected to a dedicated antenna. These deployments typically utilize high-power transmission and cover extensive geographic areas. Macro cells are more susceptible to internal PIM due to the complexity of RF feed systems, including multiple coaxial connections, duplexers, and high-power amplifiers. In addition, macro cell sites may experience external PIM resulting from reflections and interactions with nearby metallic structures, rooftops, or other urban infrastructure. DAS Systems are used to enhance coverage and capacity within specific areas, such as stadiums, airports, office buildings, and underground tunnels. DAS networks distribute RF signals from a central source to multiple remote antennas via a network of coaxial cables, fiber optics, and/or hybrid transmission lines. The distributed nature of DAS increases the number of passive components, interconnects, and potential nonlinear junctions where PIM may be introduced. Additionally, DAS deployments often operate in complex RF environments where external PIM sources, such as metallic fixtures, HVAC systems, and structural elements, can contribute to signal degradation. The presence of PIM in both macro cell and DAS systems necessitates specialized detection and mitigation techniques tailored to the unique characteristics of each deployment. The systems and methods described herein provide mechanisms for monitoring, identifying, and reducing PIM interference in diverse cellular environments, thereby improving signal quality, reducing dropped calls, and enhancing overall network performance.

In various embodiments, PIM may arise from interference generated when multiple RF signals interact at a nonlinear junction, either at an external structure exhibiting nonlinear characteristics-commonly referred to as a "rusty bolt" effector within an internal fault in the RF transmission path. External PIM sources may include metallic objects in the vicinity of an antenna, such as corroded fasteners, loose metal structures, or other conductive materials subject to oxidation, mechanical stress, or environmental exposure. Internal PIM, by contrast, may be introduced at points of contact within the RF feed system, including but not limited to, improperly torqued connectors, degraded coaxial cables, duplexers, and antenna elements, where non-ideal electrical junctions create nonlinear mixing points.

In order to detect and quantify PIM, the PIM analyzers described herein may generate and transmit two distinct RF test signals, referred to as narrowband test tones, or a wideband modulated carrier signal, at specified frequencies. In certain embodiments, a one-port PIM analyzer may be configured to transmit both test tones from a single port, thereby evaluating intermodulation effects within a shared transmission path. In other embodiments, a two-port PIM analyzer may be configured to transmit each test tone from a separate port, or alternatively, may transmit both tones from a single port depending on the desired measurement configuration. These measurement approaches allow for precise identification of PIM sources, enabling targeted mitigation techniques to improve system performance and reduce interference in communication networks.

One-port PIM analyzers can detect and measure PIM generated from both internal and external PIM sources. Two-port PIM analyzers can be configured as one-port analyzers by sending both test tones from a single RF port and then receive any resultant PIM signals on that same port. Alternatively, the two-port PIM test set can be configured to perform a two-port PIM test. For this test each of the two test tones is sent to each of two RF Ports, and any resultant PIM signals can be received on either or both RF ports.

The example methods described herein may involve controlling a two-port PIM analyzer to collect multiple data sets from a MIMO antenna system. The multiple data sets may include both one-port and two-port test results. By processing these data sets, the method can more efficiently and accurately identify the sources of PIM products, enabling precise localization and mitigation in accordance with an example embodiment.

The method may include performing multiple Distance-to-PIM (DTP) measurements for each combination of test conditions. This approach enables the capture of PIM signals that are highly variable or intermittent. The number of test rounds can be adjusted based on test conditions, either predetermined by the user or dynamically determined in real time. If the results from multiple rounds show significant variability in the presence or magnitude of specific PIM signals, additional rounds may be conducted to achieve the desired confidence level. PIM fluctuations may be influenced by factors such as weather, temperature, humidity, and component aging.

In an embodiment, each test round may comprise four distinct test cases designed to analyze PIM characteristics within a MIMO system. In this context, "MIMO branch A" and "MIMO branch B" refer to two physically separate antenna systems, each potentially including multiple antennas.

In the first test case (Case A), a one-port test is performed in which two RF test tones are simultaneously transmitted to MIMO branch A, and PIM detection is conducted exclusively on branch A. In the second test case (Case B), a similar one-port test is conducted, but the two RF test tones are instead transmitted to MIMO branch B, with PIM detection performed only on branch B. In the third test case (Case C), a two-port test is performed in which two RF test tones are transmitted separately to MIMO branches A and B, while PIM detection is performed exclusively on branch A. In the fourth test case (Case D), another two-port test is performed where the two RF test tones are transmitted separately to MIMO branches A and B, but PIM detection is performed only on branch B. By conducting these test cases, the system can isolate and analyze PIM behavior across different transmission and reception configurations, enabling precise identification of PIM sources within the MIMO system.

In an embodiment, the sequence of test execution may be arranged to maximize the probability that consistent PIM conditions are present when conducting complementary one-port and two-port tests for each MIMO branch. To ensure accuracy and minimize variations in PIM behavior due to environmental or system changes, the test methodology may implement a structured order in which Case A and Case C are performed consecutively within a given test round, followed by or preceding the consecutive execution of Case B and Case D. This sequencing allows for direct correlation of results between corresponding one-port and two-port test cases, facilitating more precise identification of PIM sources and reducing the influence of transient factors that may otherwise impact measurement consistency. Deviating from the prescribed test order may introduce variability in PIM conditions between complementary one-port and two-port tests, thereby reducing the accuracy and reliability of PIM source identification. For example, if the sequence of tests is altered such that Case A and Case C, or Case B and Case D, are not conducted in immediate succession, external factors such as temperature fluctuations, mechanical vibrations, environmental interference, or system drift may cause inconsistencies in PIM measurements. These variations can lead to erroneous correlation between test results, potentially obscuring the true origin of PIM sources within the system. Furthermore, altering the test order may affect the temporal stability of PIM signals, particularly in environments where PIM is intermittent or highly sensitive to external conditions. For example, if a significant time interval elapses between the execution of complementary tests, transient changes in RF path conditions or component states may occur, leading to misinterpretation of test data. As a result, additional testing may be required to compensate for measurement inconsistencies, thereby increasing the complexity and duration of the diagnostic process.

In an embodiment, for each corresponding set of measurements, the method may further include analyzing each test case (e.g., Case A, Case B, Case C, and Case D) to detect and identify the presence of PIM signals occurring at distinct distances (DTP) within the system. In an embodiment, the method may further include grouping all PIM signals that are determined to originate from similar distances, thereby facilitating correlation between measurement results across different test conditions. Additionally, the method may include performing statistical analysis on the detected PIM signals, wherein key parameters such as maximum power, minimum power, and average power are quantified. This statistical characterization may enable a more comprehensive assessment of PIM behavior, particularly for identifying intermittent or transient PIM signals that may not be consistently present across all test conditions. Each distinct PIM signal identified within the system may be assigned a unique signal identifier to facilitate tracking and analysis. For example, individual PIM signals may be designated as PIM Signal 1, PIM Signal 2, PIM Signal 3, and so forth. This structured classification allows for more precise identification of specific PIM sources, improving diagnostic capabilities and enhancing the effectiveness of subsequent mitigation strategies.

In an embodiment, PIM signals identified in both two-port and one-port test configurations may be correlated and attributed to the same PIM source if the calculated DTP values fall within a predefined distance difference threshold. This threshold may be user-configurable or dynamically determined based on system parameters, measurement accuracy, and environmental conditions. The determination of whether two signals originate from the same PIM source may be based on statistical analysis of distance calculations, accounting for potential measurement variations due to signal reflections, multipath interference, or minor inconsistencies in signal propagation. By setting an appropriate distance difference threshold, the system can effectively differentiate between distinct PIM sources while minimizing false associations caused by measurement noise or system drift. In some embodiments, the threshold may be adaptively adjusted based on the observed variability in PIM signal characteristics across multiple test rounds. For example, if distance calculations exhibit high consistency across different test conditions, the threshold may be reduced to improve localization accuracy. Conversely, if variations in measured PIM distances exceed expected tolerances due to factors such as temperature fluctuations or mechanical movement, the threshold may be increased to prevent erroneous classification of distinct PIM sources as a single source. Once a PIM signal is classified as originating from the same source in both one-port and two-port tests, further signal characterization may be performed, such as power level analysis, frequency-domain correlation, and time-domain tracking, to refine the identification and localization of the PIM source. This approach enhances the accuracy of PIM mitigation strategies, enabling targeted corrective actions such as component replacement, environmental shielding, or system reconfiguration to minimize PIM interference.

In an embodiment, after identifying PIM signals and correlating each detected signal to a potential PIM source, the method may further include analyzing sets of test cases to classify the PIM source as either internal or external. This classification process may involve evaluating all PIM signals detected in a given one-port test, such as Case A (one-port, MIMO Branch A), and comparing them to the PIM signals identified in the corresponding two-port test, such as Case C (two-port, TX Branch A and B, RX Branch A). In this analysis, a PIM signal that appears in both Case A (one-port) and Case C (two-port) may be classified as EXTERNAL PIM, as two-port tests may only measure intermodulation products arising from sources external to the RF feed system. Once a signal is classified as EXTERNAL PIM, it may be removed from the set of PIM signals originally identified in Case A. The remaining PIM signals, which are present in the one-port test but absent from the corresponding two-port test, may be classified as INTERNAL PIM, as they are believed to originate within the RF feed system, such as in cables, connectors, or antenna elements. This classification process may be repeated for additional test conditions, such as comparing PIM signals from Case B (one-port, MIMO Branch B) against those from Case D (two-port, TX Branch A and B, RX Branch B). Since two-port PIM tests exclusively identify EXTERNAL PIM sources, all signals detected in both Case C and Case D may be categorized as external in origin. Furthermore, the method may include a prioritization scheme based on signal strength and distribution across MIMO branches. PIM signals that are significantly stronger on one MIMO branch compared to another may indicate localized PIM sources, whereas PIM signals that are present at comparable levels across multiple MIMO branches may suggest a more pervasive external source. In some embodiments, PIM signals detected across multiple MIMO branches may be assigned a higher priority, as their widespread presence could indicate a severe external interference source requiring immediate mitigation. By systematically classifying and prioritizing PIM sources, the disclosed methods may enable more efficient identification, diagnosis, and mitigation of both internal and external PIM, improving overall network performance and signal integrity.

In an embodiment, the method may further include characterizing each detected PIM signal and identifying the most probable PIM sources within the system. This characterization process may involve constructing a reference database or table that correlates the detected PIM signals with potential source locations based on their respective distances from the PIM test point. The method may include determining the electrical or physical length of each RF feedline, component junction, and antenna element within the RF feed system. This determination may be accomplished through direct electrical measurements, such as time-domain reflectometry (TDR) or DTP analysis, or may be derived from known physical dimensions and propagation characteristics of the transmission lines used in the system. By mapping these measurements, a reference, such as a table or database, may be generated that associates each component within the system with its corresponding electrical distance from the PIM test point. This reference may provide a comprehensive reference for identifying probable PIM sources by comparing the calculated DTP values obtained from test measurements against the recorded electrical distances of system components. When a detected PIM signal's distance closely aligns with the electrical distance of a specific connector, cable junction, antenna element, or other passive component, the method may assign a high probability that the identified location is the origin of the intermodulation distortion. In some embodiments, the reference may be dynamically updated based on environmental conditions, frequency-dependent propagation effects, or system reconfigurations that may impact electrical distances. Furthermore, advanced analytical techniques such as machine learning (ML) algorithms may be employed to refine PIM source identification by recognizing patterns in historical PIM measurement data. By systematically correlating PIM detection results with known system components, the disclosed method enables precise localization of both internal and external PIM sources, facilitating targeted mitigation actions such as component replacement, re-torquing of connectors, or shielding of external reflective structures. This structured approach enhances diagnostic accuracy and improves overall system reliability by minimizing the impact of PIM interference.

In an embodiment, for each detected PIM signal, the method may further include determining the frequency of occurrence and assessing the variability of its measured power level. This analysis may involve recording the number of test instances in which the PIM signal is observed and quantifying fluctuations in its amplitude over multiple measurement cycles. This statistical characterization of PIM behavior enables more accurate identification of problematic sources, allowing for targeted mitigation strategies based on the nature and persistence of the interference.

For PIM signals identified as EXTERNAL PIM, the method can further include constructing or modifying a reference, e.g., the table, of most likely antennas from which the source signals are radiated considering the Distance to Component table. In an embodiment, the method may further include prioritizing each antenna based on the difference between the measured DTP and the known distance to each antenna within the system. This prioritization may involve ranking antennas in order of least difference between these values, thereby identifying the most probable sources of PIM. Additionally, the method may prioritize antennas where the known distance to the antenna is less than the measured DTP. Since the DTP measurement often indicates a reflection point beyond the physical location of the antenna, prioritizing antennas that fall within this range can improve source localization accuracy. By systematically analyzing these relationships, the method enhances the precision of PIM identification and mitigation strategies.

For all PIM signals identified as INTERNAL PIM, the method can include constructing a reference, e.g., the table, of most likely components from which the PIM signals are created considering the distance to component table above. Moreover, the method can include prioritizing each component in order of least difference from the measured DTP to the distance to each component.

In an embodiment, data from the two-port PIM analyzer may be collected and processed using various methodologies, depending on the system configuration and level of automation. The data acquisition process may be structured to ensure efficient analysis of PIM signals and accurate identification of PIM sources within the RF system.

In one example implementation, the PIM analyzer may operate in a stand-alone mode without an external controller. In this configuration, test data may be stored locally within the test device and subsequently transferred to an external computing device for post-processing. The external computing device may execute an algorithm, such as described above, to analyze multiple test data sets and determine probable PIM sources. In such an embodiment, access to reference data, including the known distances to each RF feedline component, may be required to facilitate determining the most likely PIM sources based on measured DTP values.

In another example implementation, a controller may be connected to the PIM analyzer to facilitate real-time data acquisition and processing. The controller may be implemented as a computing device such as a tablet, personal computer (PC), or smartphone, which interfaces with the PIM analyzer to conduct tests automatically. Upon completion of the tests, the controller may either process the acquired data locally or transmit the data to an external computing resource, such as a cloud-based processing system or networked server, for further analysis. This approach allows for automated test execution and remote processing, improving efficiency and enabling centralized data management.

In an embodiment, the method may include conducting multiple DTP measurements over a defined period to enhance the reliability and accuracy of PIM assessment. Conventional PIM testing methodologies often rely on a single measurement instance to identify and mitigate PIM sources. However, given that PIM magnitude can vary significantly over time due to environmental fluctuations, mechanical movement, or transient system conditions, relying solely on a single measurement may result in inaccurate conclusions. In particular, peak PIM values, which represent the worst-case interference conditions, may not be captured in a single test instance, leading to suboptimal mitigation decisions. To address this limitation, the disclosed methods may include performing multiple DTP measurements at different time intervals and aggregating the collected data. By combining multiple measurements, the method may capture peak PIM magnitudes and derive statistical insights regarding the variability of the detected PIM signals. These statistical insights may include measures such as maximum observed PIM power, average PIM power, and power fluctuation trends over time. By incorporating this multi-measurement approach, the system can generate more accurate and reliable PIM source identification results, leading to more effective mitigation strategies and improved overall network performance.

In an embodiment, the PIM analyzer may include a "PIM vs. Time" functionality which enables monitoring of the total PIM power variations over time. This capability may provide a broad overview of the temporal behavior of PIM interference. While the total PIM power trend can be observed, this method may not distinguish between different PIM sources, nor does it provide insight into their individual signal behaviors. For example, in a scenario where multiple PIM sources are present, one source may exhibit transient behavior, intermittently appearing and disappearing over time, while another source may generate a consistently strong PIM signal. The "PIM vs. Time" measurement alone may not differentiate these distinct PIM contributions, making it difficult to determine which sources require immediate mitigation and which are persistent background contributors. To address this limitation, the method may further include conducting multiple DTP measurements at different time intervals. By capturing and analyzing individual PIM signals over time, the system can distinguish between stable and intermittent PIM sources. This approach enables the identification of patterns in PIM behavior, such as determining whether a particular PIM source is consistently active or only appears under specific conditions (e.g., varying RF loads, environmental changes, or mechanical movement). By correlating multiple DTP measurements, the system can establish a more detailed characterization of each PIM source, allowing for targeted mitigation strategies tailored to the nature of the interference. This improves diagnostic accuracy and enhances the effectiveness of PIM reduction efforts, ultimately leading to improved network performance and reduced interference-related degradation.

In an embodiment, a systematic algorithmic approach is proposed to enhance PIM detection and characterization by performing multiple DTP measurements, isolating individual PIM signals, and tracking their behavior over time. This approach enables differentiation of distinct PIM sources and facilitates the quantification of their temporal variability, allowing for more precise PIM source identification and mitigation.

The method may further include a dynamically determined test strategy in which the number of test rounds is not fixed but instead determined in real time based on the variability of the detected PIM signals. In this embodiment, after each test round, the algorithm may analyze the results and assess the degree of fluctuation in detected PIM characteristics, such as signal presence, magnitude, and consistency. If the observed PIM variability is minimal across test rounds, the system may terminate additional testing, as sufficient confidence in the results has been achieved. Conversely, if significant fluctuations are detected, additional test rounds may be conducted to capture a more accurate representation of the PIM behavior. This adaptive approach optimizes the number of tests performed, reducing unnecessary measurements in cases where PIM signals remain stable while ensuring additional testing when required for highly variable PIM sources. The comparisons and decision-making processes within this methodology may be executed algorithmically and automatically, minimizing manual intervention and improving testing efficiency. By leveraging this intelligent, data-driven approach, the system enhances the accuracy and reliability of PIM detection while reducing testing time and resource consumption.

The disclosed methods provide a structured approach for PIM detection, classification, and source localization within a MIMO system by optimizing the sequence of test execution, distinguishing between internal and external PIM sources, and identifying the most probable locations of interference. To ensure measurement consistency, the order of test case execution within each test round is selected to minimize the probability of variations in PIM conditions between one-port and two-port tests along the same MIMO path. This preserves the integrity of comparative analysis across different test configurations. The enables classification of PIM sources by leveraging both one-port and two-port measurements. One-port tests detect PIM from both internal and external sources, while two-port tests isolate external PIM by exciting and measuring only signals that arise outside the RF feed system. By comparing these results, PIM signals detected in both test types are classified as externally generated, whereas those present only in one-port measurements are identified as internal PIM sources. These measurements may be performed using either PIM vs. Time analysis or DTP techniques.

For internal PIM localization, the system compares the measured DTP values to known electrical lengths of RF feed components to generate a prioritized list of probable PIM sources within the transmission path. By incorporating PIM magnitude analysis, the method enhances source identification, enabling efficient mitigation strategies.

External PIM localization is performed by analyzing DTP measurements to determine which antennas are radiating and receiving the interfering signals. This process is particularly critical in Distributed Antenna Systems (DAS), where numerous antennas at varying electrical distances from the test point must be evaluated. The ability to rapidly identify the antenna associated with external PIM enables targeted mitigation efforts, such as isolating or modifying nearby reflective structures, ensuring effective interference reduction and improved network performance. In an embodiment, further refinement of external PIM localization is achieved by analyzing the measured DTP in relation to the electrical characteristics of the antenna system. The approximate distance to the external PIM source may be determined by summing the electrical distance from the test point to the antenna, the electrical length of the antenna itself, and the physical distance from the antenna to the external PIM-generating object. To accurately identify which antenna(s) are involved in generating or receiving a specific external PIM signal, the method may rely on pre-determined electrical distance data for each antenna within the MIMO branch. By correlating DTP measurements with these known distances, the system systematically narrows down the list of potential antennas contributing to external PIM. This targeted identification process enables efficient mitigation by allowing network operators to focus corrective actions on the specific antennas and surrounding structures most likely responsible for the interference.

The disclosed methods significantly reduce effort and cost compared to conventional PIM mitigation practices. Traditional approaches often require physically accessing numerous antennas-sometimes twenty or more-using equipment such as man lifts, scaffolding, or rigging. These procedures must be carried out regardless of environmental conditions, access restrictions, or safety hazards. Conventional methods may also necessitate multiple access events to isolate specific antennas contributing to PIM, increasing labor and operational costs. Additionally, repeated connection and disconnection of antenna components introduce risks of contamination or mechanical degradation. For example, moisture or debris entering connectors during handling may create new PIM sources, while improper cable handling, such as exceeding minimum bend radius or incorrect torque application, can further degrade performance. By implementing the described method, which systematically identifies and prioritizes likely PIM sources before physical intervention, the need for unnecessary antenna access, repeated reconnections, and associated risks is minimized. This results in a more efficient and cost-effective approach to PIM detection and mitigation.

Based on the significant challenges of identifying and mitigating PIM, any means of reducing the need to access the antennas is beneficial. The methods described here make substantial steps towards this goal, are quantifiably superior to standard industry practice today, and can eliminate the need to access the antennas.

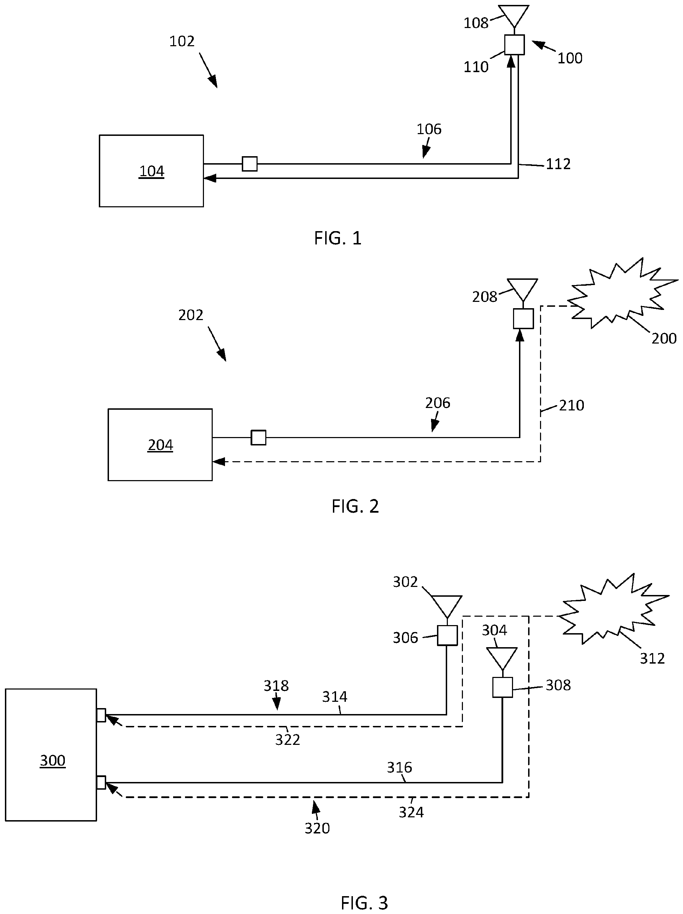

Reference is now made to the drawings. FIG. 1 illustrates an example of an internal PIM as detected using methodology described herein. FIG. 1 illustrates an example embodiment of an internal passive intermodulation (PIM) source 100 within a communication system 102. The system 102 includes a transceiver (Tx/Rx) 104, an RF feedline 106, an antenna 108, and a faulty connector 110 generating PIM as the PIM source 100. The transceiver 104 may be referred to as a test analyzer, a two-port analyzer, a PIM analyzer, or the like. The transceiver 104 can include control circuitry including, for example, a processor coupled to memory. The processor can be any suitable processing device (e.g., a control circuitry, a processor core, a microprocessor, an application specific integrated circuit, a field programmable gate array, a controller, a microcontroller, etc.) and can be one processor or a plurality of processors that are operatively connected. The memory can include one or more non-transitory computer-readable storage media, such as RAM, ROM, EEPROM, EPROM, one or more memory devices, flash memory devices, etc., and combinations thereof. The memory can store information that can be accessed by the processor(s). For instance, the memory (e.g., one or more non-transitory computer-readable storage mediums, memory devices) can include computer-readable instructions that can be executed by the processor(s). The instructions can be software, firmware, or both written in any suitable programming language or can be implemented in firmware or hardware. Additionally, or alternatively, the instructions can be executed in logically and/or virtually separate threads on processor(s). For example, the memory can store instructions that when executed by the processor(s) cause the processor(s) to perform operations such as any of the operations and functions as described herein.

The transceiver 104 transmits RF signals through the feedline 106 to the antenna 108. The faulty connector 110 is present along the feedline 106. Due to non-ideal electrical contact, material imperfections, mechanical degradation, and/or a similar related reason, the faulty connector 110 located near or within the antenna assembly 108 introduces nonlinearities, causing PIM generation. A PIM signal 112 is reflected from the faulty connector 110 back into the system 102 and received by the transceiver 104. This example demonstrates an internal PIM scenario where the source of intermodulation distortion is within the RF transmission path itself, rather than being generated by external reflective objects. Identifying such internal PIM sources using Distance-to-PIM (DTP) measurements and systematically correlating them with known system components allows for targeted mitigation strategies, such as replacing or re-torquing faulty connector 110 to minimize interference and improve signal integrity.

FIG. 2 illustrates an example of an external PIM as detected using methodology described herein. In particular, FIG. 2 illustrates an example embodiment of an external passive PIM source 200 within a communication system 202. The system 202 includes a transceiver (Tx/Rx) 204, an RF feedline 206, an antenna 208, and the external PIM source 200 generating PIM.

The transceiver 204 transmits RF signals through the feedline 206 to the antenna 208. The PIM source 200 is disposed near the feedline 206. Unlike internal PIM, where intermodulation products are generated within the RF transmission path, external PIM occurs due to nonlinear interactions with objects outside the system 202. In this example, the PIM source 200 is located in proximity to the antenna 208. This external object, which may be, for example, a corroded metallic structure, fastener, or other conductive material exhibiting nonlinear characteristics, reflects intermodulation products back toward the antenna 208.

An external PIM signal path 210, represented by the dotted line, begins at the PIM source 200 and propagates back toward the antenna 208, which then couples the interference into the feedline 206. This unwanted signal travels through the RF system 202 and is received by the transceiver 204, causing degradation in signal quality.

Unlike internal PIM, external PIM sources are often variable and influenced by environmental conditions, such as temperature changes, mechanical vibrations, or the relative position of reflective objects. Identifying such sources may require two-port PIM testing and Distance-to-PIM (DTP) analysis, allowing for targeted mitigation strategies such as repositioning the antenna 208, modifying surrounding structures, or applying RF-absorptive materials to suppress nonlinear reflections.

FIG. 3 illustrates an example embodiment of a two-port passive intermodulation (PIM) test conducted on a MIMO system, demonstrating how external PIM sources can be detected and distinguished from internal PIM sources. The system includes a two-port PIM test set 300, a MIMO antenna system comprising at least two antennas 302, 304, an RF feed system with connectors 306, 308, an internal PIM source in the form of a faulty connector 310, and an external PIM source 312.

The two-port PIM test set 300 is configured to generate test signals (i.e., test tones or a wideband modulated carrier signal) for evaluating PIM behavior within the MIMO system. The system includes at least two antennas - a first antenna 302 and a second antenna 304. These antennas 302, 304 are physically separate components within the MIMO system and serve as radiating elements that can both generate and receive RF signals. Each antenna 302, 304 is connected to the system via respective connectors 306, 308, which interface with the RF feed system.

The first connector 306 is the faulty connector in the example and is located near the first antenna 302 and represents a potential internal PIM source. This internal PIM source arises due to nonlinearities introduced at the electrical contact points within the transmission system. However, because internal PIM is confined to its respective RF feed path, it does not contribute to intermodulation products in a two-port test. The external PIM source 312 is located outside the RF feed system. This external PIM source 312 may be a nearby reflective metallic object exhibiting nonlinear characteristics, such as a corroded structure, loose metallic connections, or improperly installed equipment in proximity to the antennas 302, 304. The presence of this external PIM source 312 is critical, as it contributes to PIM interference that can degrade overall system performance.

The two-port PIM test set 300 generates two distinct test signals, a first PIM source signal 314 and a second PIM source signal 316. Each signal 314, 316 is transmitted through separate RF paths 318, 320, respectively, ensuring that intermodulation products generated internally within any individual feed system do not combine to form detectable PIM.

External PIM signal paths 322, 324 illustrate how PIM is introduced into the system from an external source. The signals from the test set 300 are radiated by the first antenna 302 and the second antenna 304, interacting with the external PIM source 312. The nonlinearity at this external source generates intermodulation products, which are subsequently reflected back toward the antennas 302, 304. These intermodulation signals are received by the antennas 302, 304 and propagate through the RF feed system back to the test set 300, where they can be analyzed for detection and characterization.

A key characteristic of the two-port PIM test is that only external PIM sources generate detectable PIM. This occurs because, in a MIMO system, each test signal follows an independent transmission path. Since internal PIM arises from nonlinearities within individual RF paths, no intermodulation mixing occurs between signals from separate ports. Consequently, internal PIM sources such as the faulty connector 310 do not contribute to the measured PIM in this test configuration.

Conversely, external PIM sources (e.g., PIM source 312) affect signals from both antennas, allowing intermodulation products to form and return to the test set. This makes two-port testing an effective method for isolating external PIM sources while excluding interference from internal nonlinearities.

By leveraging a two-port PIM test, network operators can efficiently identify and localize external PIM sources, reducing the time and effort required for troubleshooting. In conventional one-port testing, distinguishing between internal and external PIM requires multiple test iterations and physical intervention, such as manually inspecting and replacing components in the RF feed system. However, with a two-port test, external PIM can be rapidly identified without requiring disassembly of the RF system.

Additionally, this method minimizes unnecessary maintenance actions, such as disconnecting and reconnecting antennas, which could introduce new PIM sources due to improper torque, contamination of connectors, or cable misalignment. By precisely identifying external PIM sources, network operators can focus mitigation efforts on modifying nearby structures, repositioning antennas, or applying RF-absorptive materials, rather than making invasive changes to the RF feed system.

The illustrated two-port PIM test on a MIMO system demonstrates a method for detecting and isolating external PIM sources while eliminating false positives caused by internal nonlinearities. The test set 300 transmits independent signals along separate paths, ensuring that only externally generated PIM is detected. The method further enables the accurate localization of external PIM sources, streamlining the mitigation process and improving network performance by reducing interference-related degradation.

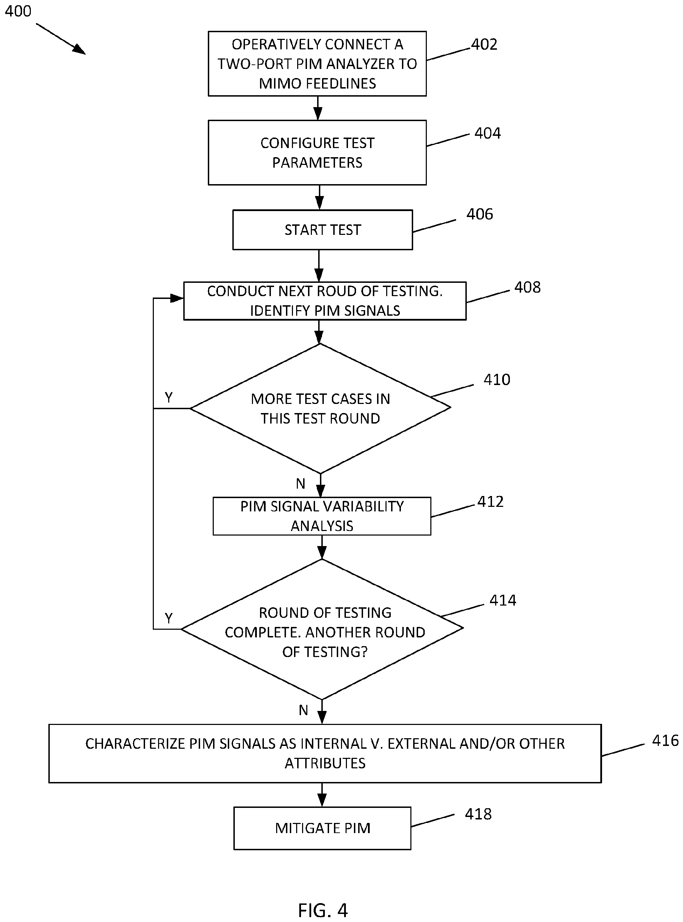

FIG. 4 illustrates a flow diagram of a method 400 for detecting and mitigating PIM in a MIMO communication system according to example embodiments of the present disclosure. In general, the method 400 will be described with reference to a system including an analyzer connected to an IM product such as those described in FIGS. 1 to 3. Although FIG. 4 depicts steps performed in a particular order for purposes of illustration and discussion, the method discussed herein is not limited to any particular order or arrangement. One skilled in the art, using the disclosure provided herein, will appreciate that various steps of the method disclosed herein can be omitted, rearranged, combined, and/or adapted in various ways without deviating from the scope of the present disclosure.

The method 400 provides a structured approach for detecting, analyzing, and/or mitigating passive intermodulation (PIM) in a MIMO communication system. The method 400 leverages a two-port PIM analyzer to systematically evaluate PIM characteristics, distinguishing between internal and external PIM sources, and optimizing the number of test rounds based on real-time variability analysis.

In an embodiment, method 400 includes step 402 wherein a two-port PIM analyzer is operatively connected to MIMO feedlines of a system under test to establish an electrical interface between the test equipment and the RF transmission paths, enabling controlled excitation and measurement of PIM signals. The connection may be achieved through direct coupling to the RF ports of the system, insertion at a test access point, or integration into the network infrastructure via calibrated adapters and connectors to ensure minimal signal loss and measurement integrity. By connecting the two-port PIM analyzer to the MIMO feedlines, the system is configured to inject two distinct RF test signals into separate transmission paths. The analyzer may be programmed to transmit these signals in a simultaneous mode, where both signals are introduced at the same time to evaluate real-time PIM interactions, or in a sequential mode, where test signals are injected independently into different MIMO branches to isolate specific PIM behaviors. This flexibility allows for enhanced resolution in distinguishing between internal PIM, which originates within the RF feed system, and external PIM, which results from nonlinear interactions with objects outside the system. Additionally, the connection configuration enables the measurement of intermodulation products returning through the feedlines, allowing the system to detect and quantify both reflected and transmitted PIM energy. This approach facilitates Distance-to-PIM (DTP) analysis, which correlates detected PIM signals with specific locations along the transmission path, aiding in precise source localization. By leveraging a structured test interface, step 402 ensures that the two-port PIM analyzer operates in an optimized measurement environment, improving the accuracy and reliability of PIM detection and classification.

In an embodiment, method 400 includes a step 404 wherein test parameters are configured based on system requirements, testing objectives, and/or network conditions. The configuration of test parameters establishes the framework for executing the PIM measurement process, ensuring that the methodology is optimized for the specific RF environment, MIMO system architecture, and operational constraints. The test parameters set at step 404 may include, but are not limited to a sequence of test execution, a number of test rounds, a target confidence level for PIM detection, and/or MIMO paths and antenna systems to include in the test procedures.

The sequence of test execution can define a predefined order in which test cases are conducted within each test round. This sequencing may be important for minimizing PIM variability between complementary one-port and two-port tests, ensuring that consistent environmental and system conditions are maintained for accurate comparison. The selected sequence may prioritize one-port tests to establish a baseline for internal and external PIM presence, followed by two-port tests to confirm and isolate external PIM sources.

The number of test rounds may capture the number of iterations required to achieve statistically significant PIM detection results. The test rounds may be predefined based on prior system characterization or dynamically adjusted based on real-time analysis of PIM variability. A higher number of test rounds may be selected in environments where PIM is intermittent, ensuring that transient sources are accurately captured.

The target confidence level for PIM detection can capture a statistical confidence threshold required to validate PIM measurement results. This confidence level may be set based on predefined network performance criteria, regulatory compliance requirements, or operational tolerances for acceptable interference levels. Achieving a high-confidence measurement ensures that PIM classification decisions are based on robust and repeatable data.

The MIMO paths and antenna systems to include in the test procedure can capture a selection of the specific MIMO branches, RF feedlines, and antenna elements that will be subjected to PIM testing. In a massive MIMO or distributed antenna system (DAS), multiple antennas operate at different electrical distances from the test point. The configuration process may include prioritization of antennas based on their likelihood of contributing to PIM, optimizing resource allocation and measurement efficiency.

The proper configuration of these test parameters at step 404 can ensure the reliability and accuracy of PIM identification. By tailoring the test setup to the specific RF infrastructure, environmental conditions, and operational constraints, the method enhances diagnostic precision, minimizes false positives or negatives, and improves the overall efficiency of PIM mitigation strategies. Additionally, automated parameter optimization algorithms may be integrated to dynamically refine the test procedure based on real-time measurement data, further enhancing the adaptability and effectiveness of the methodology.

In an embodiment, method 400 includes step 406 wherein the testing process is initiated following the configuration of test parameters. At this stage, the two-port PIM analyzer begins injecting controlled RF test tones into the system under test. These test tones are transmitted into the MIMO feedlines, exciting the transmission paths in a manner that simulates real-world RF operating conditions while enabling the detection and characterization of passive intermodulation (PIM) products.

The PIM analyzer may transmit two or more discrete RF signals at predefined frequencies. If nonlinearities are present within the system, these signals can interact to generate intermodulation products, which appear as additional frequency components within the operating spectrum. The analyzer continuously monitors system response, capturing the presence, amplitude, and frequency characteristics of any generated PIM signals. The detection process may be conducted across multiple test iterations to ensure repeatability and accuracy, particularly in environments where PIM signals exhibit temporal variability due to external influences.

The test procedure in step 406 may detect PIM signals arising from both internal and external sources. Internal PIM sources may include faulty connectors, improperly torqued cable joints, corroded RF components, or degraded transmission lines within the RF feed system. These sources produce intermodulation products due to imperfections in electrical contacts or material nonlinearities. By analyzing signal reflections within the transmission path, internal PIM sources can be localized based on Distance-to-PIM (DTP) measurements. External PIM sources, in contrast, may be generated by nonlinear interactions between the radiated RF signals and conductive objects located outside the RF transmission path. These objects may include metallic structures, improperly installed fasteners, aging infrastructure components, or environmental obstructions in proximity to the antenna system. Unlike internal PIM, which remains confined within the feed system, external PIM propagates through free space, interacts with external surfaces, and is then re-coupled into the system via the antenna, leading to interference. By initiating the two-port PIM test process at step 406, the system establishes a controlled environment for identifying, quantifying, and distinguishing between internal and external PIM sources. The structured testing procedure enables accurate source classification and facilitates subsequent mitigation strategies, ensuring optimal system performance with minimal interference.

In an embodiment, method 400 includes step 408 wherein a subsequent round of testing is conducted to identify and analyze PIM signals detected within the system under test. During this step, the two-port PIM analyzer executes an additional test cycle, transmitting RF test tones into the MIMO feedlines and monitoring the resulting intermodulation products. This iterative testing approach ensures that detected PIM signals are consistently observed across multiple rounds, allowing for enhanced accuracy, repeatability, and statistical validation of the measurement data. The two-port PIM test methodology employed in step 408 enables the differentiation of external PIM from internal PIM by leveraging the unique characteristics of each PIM type. Because two-port testing excites multiple transmission paths, only externally generated intermodulation products appear as detectable interference. Conversely, internal PIM is generated within the RF transmission path itself. Since internal PIM results from non-ideal electrical contacts along a single feedline, two-port testing does not produce detectable intermodulation products from internal sources, effectively isolating them from the test results.

In an embodiment, method 400 includes step 408 wherein an additional round of testing is performed to further identify and analyze PIM signals detected within the system. During this step 408, the two-port PIM analyzer injects RF test tones into the MIMO feedlines, capturing intermodulation products that may arise due to nonlinearities present either within the transmission path or in the external environment. By executing repeated test rounds, the method improves measurement accuracy and reliability, ensuring that transient PIM sources are properly characterized.

At step 408 the system can separate external PIM from internal PIM, made possible through the two-port PIM test methodology. External PIM is generated by nonlinear interactions between radiated RF signals and conductive objects outside the RF transmission path, such as corroded metallic structures, loose mechanical fixtures, or reflective surfaces near the antenna system. These objects act as unintentional nonlinear mixing points, generating intermodulation products that propagate back into the system via the antenna. By employing a two-port test, which simultaneously injects signals into multiple transmission paths, the system ensures that only external PIM sources produce detectable intermodulation products.

In an embodiment, method 400 includes step 410 wherein the system determines whether additional test cases remain within the current test round. This decision-making step ensures that all necessary test conditions have been evaluated before proceeding to subsequent analysis or concluding the testing process.

The determination of whether further test cases are required may be based on predefined test parameters, such as the total number of test cases specified during step 404, or on dynamic criteria, including the observed variability in PIM signal characteristics during prior measurements. Each test case may involve different MIMO branches, antenna configurations, frequency combinations, or environmental conditions, all of which contribute to a comprehensive evaluation of PIM behavior within the system.

If additional test cases remain within the current test round (Y path), the method returns to step 408, where further test cases are executed. This iterative process allows the system to capture multiple instances of PIM occurrence, improving the accuracy of PIM classification, source localization, and signal variability analysis. If no further test cases exist for the current round (N path), the method proceeds to step 412, where additional PIM signal analysis, including variability assessment and statistical processing, may be conducted. By implementing this structured decision checkpoint, the method ensures that testing is exhaustive yet efficient, preventing unnecessary test iterations while guaranteeing that sufficient data has been gathered for accurate PIM identification and mitigation.

In an embodiment, method 400 includes step 412 wherein an optional PIM Signal Variability Analysis may be performed to assess fluctuations in detected passive intermodulation (PIM) signals over time. This step accounts for the fact that PIM levels are inherently dynamic, with variations influenced by temperature fluctuations, mechanical stresses, environmental changes, and RF loading conditions. These factors can cause intermittent or transient PIM sources that may not be consistently present across all test iterations, necessitating a deeper statistical evaluation. The PIM Signal Variability Analysis in step 412 quantifies the degree of variation in key PIM characteristics, including but not limited to PIM magnitude (power levels), frequency shifts, and occurrence rates across multiple test rounds. This analysis ensures that the system does not rely on a single test instance, which may fail to capture worst-case PIM conditions or overlook intermittent PIM sources that only appear under specific system states. To improve diagnostic accuracy, the method may incorporate statistical modeling techniques such as worst-case PIM detection, time-domain tracking, and multi-round averaging. Worst-case PIM detection ensures that the peak intermodulation levels observed during testing are recorded, allowing for a conservative approach to mitigation. Time-domain tracking enables the identification of recurring PIM patterns, which can be correlated with external influences such as thermal expansion, structural movement, or variable RF conditions.

In an embodiment, method 400 includes step 414 wherein the system evaluates whether an additional round of PIM testing is necessary based on the data collected in prior test iterations. This decision-making step ensures that testing continues only if required, thereby optimizing the balance between measurement accuracy and testing efficiency. The determination of whether further testing is needed may be based on predefined confidence thresholds, statistical variability in detected PIM signals, or real-time analysis of PIM classification consistency. If the observed PIM characteristics exhibit significant variability or if detected signals lack sufficient repeatability for accurate classification, additional testing may be required to refine the results and enhance PIM source localization.

If further testing is required (Y path), the process returns to step 408, where the system executes another round of test case measurements. This iterative approach ensures that all relevant system conditions, MIMO branches, and test parameters are adequately assessed before drawing final conclusions. If no additional testing is deemed necessary (N path), the method proceeds to step 416, where PIM signal classification, source determination, and reporting are performed. By implementing this structured checkpoint at step 414, the method ensures that testing is exhaustive yet efficient, preventing unnecessary test repetitions while ensuring that PIM identification meets the required confidence levels for effective mitigation.

In an embodiment, method 400 includes step 416 wherein the identified PIM signals are characterized based on source classification, DTP, signal strength, and variability for each MIMO path. This characterization step enables a comprehensive assessment of PIM sources, ensuring that detected intermodulation products are accurately classified and prioritized for mitigation.

The method systematically distinguishes internal PIM from external PIM by leveraging one-port vs. two-port comparative analysis. One-port PIM testing detects intermodulation products from both internal and external sources, while two-port testing isolates external PIM by ensuring that only signals from non-physically connected nonlinear sources produce measurable PIM. By comparing test results from both methodologies, the system confirms the origin of each detected PIM source, preventing misclassification and ensuring precise localization. To further refine source identification, the method assigns DTP values to each detected signal. These values are computed based on the electrical path length of the RF transmission system, allowing for the correlation of detected PIM sources with known system components such as connectors, cable junctions, or antenna elements. External PIM sources are similarly localized by analyzing DTP values in conjunction with known antenna distances and potential environmental reflectors. Once PIM sources are identified, the method can prioritize them based on signal severity, persistence, and network impact. Persistent, high-power PIM sources that degrade overall system performance, capacity, or spectral efficiency may be assigned a higher priority, while intermittent or lower-magnitude sources may be monitored for potential future mitigation. Finally, a PIM signal results table is generated, summarizing key findings such as PIM classification (internal vs. external), DTP measurements, frequency-domain characteristics, power levels, and variability metrics. This table provides actionable data for network operators, enabling targeted PIM mitigation strategies that optimize RF system performance while minimizing unnecessary maintenance actions. By executing step 416, the method ensures that PIM classification is accurate, data-driven, and operationally relevant, improving diagnostic efficiency and network reliability.

In an embodiment, method 400 includes step 418 wherein the PIM mitigation process is executed based on the characterization data obtained in previous steps. The identified PIM sources, whether internal or external, are addressed through targeted corrective actions to minimize intermodulation interference and optimize RF system performance.

For internal PIM sources, mitigation strategies may include replacing faulty connectors, re-torquing improperly seated cable joints, replacing degraded transmission lines, or upgrading RF components to materials with lower nonlinear susceptibility. If internal PIM is localized within a specific feedline section or antenna element, corrective actions may involve cleaning, tightening, or re-securing connections to restore optimal electrical contact and minimize nonlinearities.

For external PIM sources, mitigation efforts may involve adjusting antenna positioning to reduce interaction with nearby nonlinear objects, modifying surrounding reflective structures to eliminate sources of unwanted intermodulation, or applying RF-absorptive materials to suppress PIM reflections. If external PIM sources are identified in the vicinity of the antenna system, physical barriers, repositioning of antennas, or environmental shielding techniques may be employed to minimize their impact.

In some embodiments, network-level optimizations may be implemented as part of the mitigation process. These optimizations may include adjusting frequency allocations, modifying power levels, or implementing software-based interference cancellation techniques to further reduce PIM-related signal degradation.

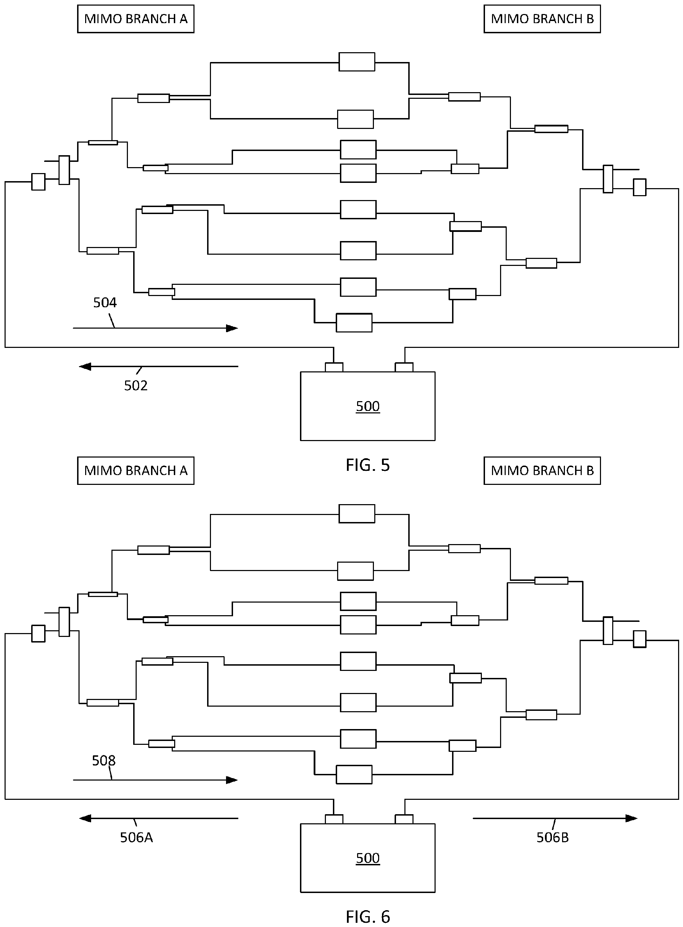

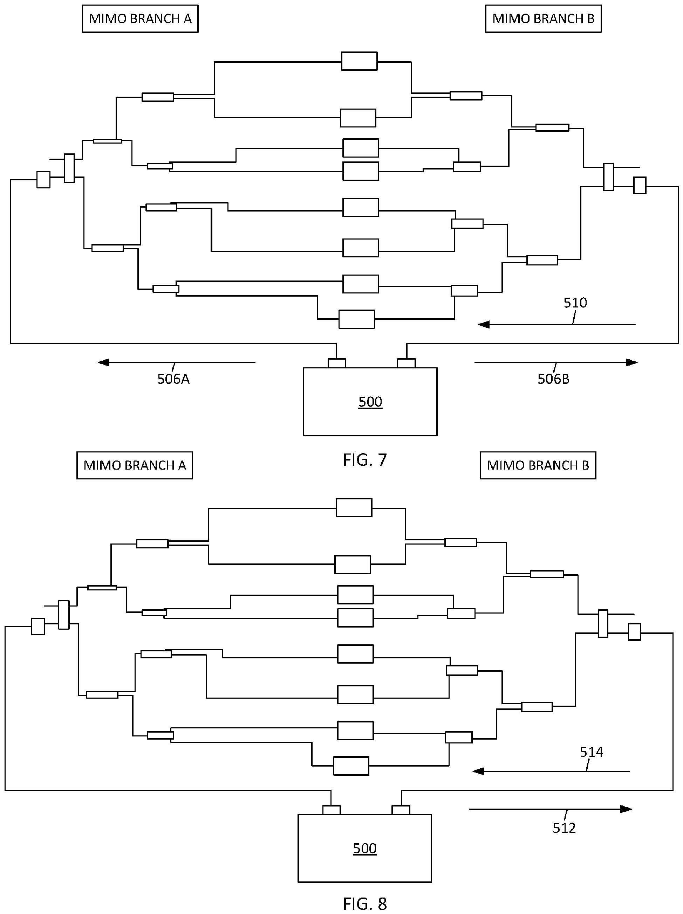

FIGS. 5 to 8 illustrate the use of 1-Port and 2-Port DTP measurements in a MIMO antenna system to determine whether detected PIM signals are internally or externally generated and to identify the most probable components responsible for PIM generation. The method leverages a 2-Port PIM analyzer to conduct multiple test scenarios, using DTP trace data to characterize the location and nature of detected PIM sources. In particular, FIG. 5 depicts a first branch (BRANCH A) 1 port DTP trace; FIG. 6 depicts the first branch (BRANCH A) 2 port DTP trace; FIG. 7 depicts a second branch (BRANCH B) 1 port DTP trace; and FIG. 8 depicts the second branch (BRANCH B) 2 port DTP trace.

The method employs a combined data set consisting of one or more 1-Port DTP traces and one or more 2-Port DTP traces to determine the origin of PIM signals. By analyzing these traces alongside known electrical distances to each component in the MIMO system, the method identifies whether the PIM source is internal or external and determines its probable generation location. Specifically, for internal PIM, the system identifies the specific component junction or element responsible for generating intermodulation distortion. For external PIM, the system determines which antenna is receiving and coupling the interfering signals. This process improves PIM source localization, facilitating targeted mitigation strategies.

FIG. 5 illustrates a 1-Port DTP measurement for MIMO Branch A. The 2-Port PIM analyzer 500 is configured to inject 502 two RF test tones (f1, f2) into the MIMO feedlines. The system measures the return PIM signal along the same single transmission path, identifying internal PIM sources. The arrow 504 represents detected PIM signals, which may originate from nonlinearities within the transmission system, such as faulty connectors or degraded passive components.

FIG. 6 illustrates a 2-Port DTP measurement for MIMO Branch A, in which the PIM analyzer 500 transmits 506A, 506B test signals separately from Port 1 and Port 2, ensuring that intermodulation products are only generated by external PIM sources. Here, the PIM signals detected 508 originate outside the RF feed system, confirming an external PIM source when comparing to FIG. 5. This distinction allows for determining whether mitigation efforts should focus on internal component replacement or external structural modifications.

FIG. 7 illustrates a 2-Port DTP measurement for MIMO Branch B, similar to FIG. 6 but conducted along the MIMO B feedline. The PIM signals 510 detected in this test confirm the presence of external intermodulation distortion, as internal nonlinearities do not contribute to the measurement in a 2-Port test configuration. The arrow 510 again denotes the returning PIM signal path, which can be analyzed against known component distances.

FIG. 8 illustrates a 1-Port DTP measurement for MIMO Branch B, mirroring the setup in FIG. 5 but on a separate transmission path. The PIM analyzer 500 injects 512 both tones into the MIMO Branch B path and records intermodulation reflections 514, identifying potential internal PIM sources. The comparison of FIGS. 6 and 7 enables the classification of internal vs. external PIM for MIMO Branch B.

The systems and method disclosed herein leverage comparative analysis between these four test configurations to classify detected PIM as internal or external. If PIM appears in both the 1-Port and 2-Port traces for a given MIMO branch, it is classified as external PIM because only external sources contribute to 2-Port PIM measurements. If PIM is detected only in 1-Port tests but not in the 2-Port tests, the interference is classified as internal PIM, confirming that the source exists within the transmission system and not in the external environment. Using distance-to-PIM (DTP) data, the system can further refine PIM source localization by mapping the detected PIM distances to known component locations. For internal PIM, this enables identification of the specific faulty component responsible for nonlinear signal distortion. For external PIM, the method determines which antenna system is coupling the external interference, guiding network optimization and structural mitigation efforts.

In an embodiment, for each PIM signal detected in the four DTP trace scenarios, the system performs a structured analysis process to extract critical classification and localization parameters. By leveraging the combined 1-Port and 2-Port DTP data sets, the method determines whether the detected PIM is internal or external, assesses its signal strength, computes its mean distance, and identifies the most probable components responsible for generating the intermodulation distortion.

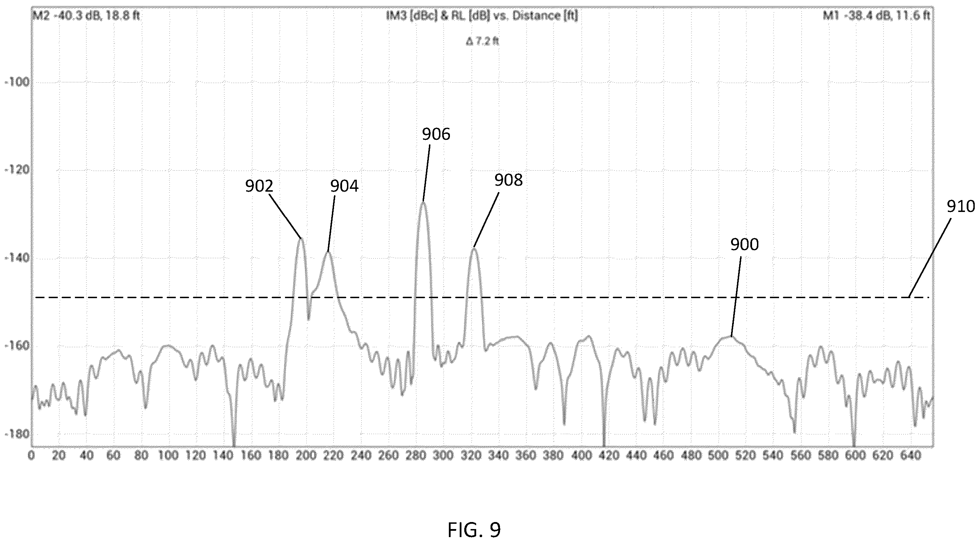

FIG. 9 illustrates an example DTP trace including detected PIM signal level 900 as a function of distance from the PIM test site.

In an embodiment, for each localized peak 902, 904, 906, 908 identified in the DTP measurement, the system evaluates whether the peak exceeds a predefined PIM signal identification threshold 910. If the measured PIM signal level at a given peak surpasses this threshold 910, the system classifies the detected intermodulation as a distinct PIM signal and assigns it a unique PIM signal identifier.

Each distinct PIM signal is characterized by its signal magnitude and its distance from the PIM test set, as determined by the DTP algorithm. The PIM signal level is quantified based on the measured power of the intermodulation product, while the distance metric represents the calculated electrical or physical separation between the PIM analyzer and the nonlinear component or reflective structure responsible for the interference. The PIM signal identification threshold 910 may be dynamically or statically defined, depending on the system configuration, operational environment, and network performance criteria. A higher threshold may be set to focus on severe and persistent PIM sources, while a lower threshold may be used for sensitive detection of intermittent or low-level intermodulation products. The threshold can also be adaptively adjusted based on real-time PIM variability analysis, ensuring that transient, environmental, or temperature-sensitive PIM sources are properly accounted for. If multiple localized peaks are detected in the DTP trace, each exceeding the PIM Signal Identification Threshold 910, the system records and classifies each peak as a separate PIM signal, assigning corresponding parameters such as: PIM signal level (power/magnitude), Distance to the detected PIM source, Classification as internal or external PIM, Associated RF component or antenna system. This methodology ensures a granular and precise identification of multiple PIM sources, allowing for effective mitigation strategies targeted at the exact locations of the nonlinearities within the system.

Table 1 below illustrates PIM signal (as dB) and distance for four identified localized peaks 902, 904, 906, 908.

**Table 1 - Localized peaks determined from DTP traces**

| PIM Signal ID | Level (dBc) | Distance (ft) |
|---|---|---|
| 1 | -135 | 195 |
| 2 | -138 | 215 |
| 3 | -128 | 284 |
| 4 | -137 | 321 |

| PIM Signal ID | Distance (ft) | Level (dBc) |
|---|---|---|
| 1P1 | 195 | -135 |
| 1P2 | 213 | -138 |
| 1P3 | 283 | -128 |
| 1P4 | 322 | -137 |

FIG. 11 illustrates an example DTP trace including detected PIM signal level 1000 as a function of distance from the PIM test site. In an embodiment, for each localized peak 1002, 1004, 1006 identified in the DTP measurement, the system evaluates whether the peak exceeds a predefined PIM Signal Identification Threshold 1008. If the measured PIM signal level at a given peak surpasses this threshold 1008, the system classifies the detected intermodulation as a distinct PIM signal and assigns it a unique PIM signal identifier.

**Table 2 - External PM signals identified from a second DTP trace**

| PIM Signal ID | Level (dBc) | Distance (ft) |
|---|---|---|
| 2P1 | -138 | 215 |
| 2P2 | -137 | 282 |
| 2P3 | -141 | 353 |

In an embodiment, an external PIM distance mask is generated based on PIM signals identified from the 2-port DTP traces. This masking technique enhances the accuracy of external PIM source localization by defining spatial constraints where external PIM sources are likely to be present. By aggregating these constraints into a unified distance mask, the system effectively isolates external PIM contributions, distinguishing them from internal nonlinearities and unrelated noise artifacts. The external PIM distance mask is generated by defining external PIM distance windows, each corresponding to a detected external PIM signal. Each distance window is centered around the measured DTP value associated with an external PIM source and extends over a predefined range. Specifically, for each detected external PIM signal, a distance window is formed by starting at a starting distance d1 which is a predefined offset shorter than the detected PIM signal distance, the window extending to a stopping distance d2 which is a predefined offset beyond the detected PIM signal distance, and the aggregation of all individual external PIM distance windows to form the external PIM distance mask. In an illustrative example, where d1 = 3 feet and d2 = 6 feet, the following External PIM Distance Windows are generated:

**Table 3 - External PIM distance mask**

| Ext PIM Signal ID | Distance (ft) | Level (dBc) | Window Start Distance (ft) | Window Stop Distance (Ft) |
|---|---|---|---|---|
| 2P1 | 215 | -138 | 212 | 221 |
| 2P2 | 282 | -137 | 279 | 288 |
| 2P3 | 353 | -141 | 350 | 359 |

Since external PIM can be intermittent or vary due to moving reflective sources, multiple 2-Port DTP traces may be used to enhance the accuracy of the External PIM Distance Mask. By identifying PIM signals across multiple traces and using each as the center of an External PIM Distance Window, the method ensures robust detection and localization of external PIM sources despite their variability.

The resultant External PIM Distance Mask is:

**Table 4 - External v. Internal PIM distance mask**

| **Distance Start** | **Distance Stop** | **PIM Type** |
|---|---|---|
| 0 | 212 | Internal |
| 212 | 221 | External |
| 221 | 279 | Internal |
| 279 | 288 | External |
| 288 | 350 | Internal |
| 350 | 359 | External |
| 359 | Max Antenna Distance | Internal |

The external PIM distance mask is used to classify PIM signals identified from 1-Port DTP traces as either internal or external PIM by mapping each detected PIM signal's distance to the predefined external PIM distance ranges. If the PIM signal distance falls within the external PIM distance mask, it is classified as external PIM, whereas if it falls outside, it is classified as internal PIM. Once all 1-Port PIM signals are categorized, a Composite PIM signal table is generated, incorporating PIM signals from both 1-Port and 2-Port DTP traces for comprehensive PIM analysis and mitigation planning.

All PIM signals identified in the 1-Port and 2-Port tests are then combined into a single PIM signal table:

**Table 5 - Combined PIM signal table**

| PIM Signal ID | Distance (ft) | Level (dBc) | PIM Origen Type |
|---|---|---|---|
| 1P1 | 195 | -135 | Internal |
| 1P2 | 213 | -138 | External |
| 2P1 | 215 | -138 | External |
| 2P2 | 282 | -137 | External |
| 1P3 | 283 | -128 | External |
| 1P4 | 322 | -137 | Internal |
| 2P3 | 353 | -141 | External |

In an embodiment, multiple sets of 1-Port and 2-Port DTP traces are collected and analyzed to account for the intermittent nature of PIM signals, which may disappear, reappear, or fluctuate in power over time. As DTP measurements occur over short durations, utilizing multiple DTP data sets, each comprising two 1-Port and two 2-Port measurements, ensures that the characteristics of each unique PIM signal are accurately captured and tracked over time. Each test round consists of these four measurements, with the number of test rounds dynamically determined based on real-time PIM variability analysis, thereby optimizing the test process to achieve the desired confidence level without conducting unnecessary measurements. Additionally, the order of test execution within each round is selected to minimize the probability of PIM variations between consecutive one-port and two-port tests, ensuring measurement consistency and reliable PIM classification for each MIMO path.

In an embodiment, a Composite PIM Signal Table is generated to consolidate PIM signals originating from the same PIM source, even when detected across multiple PIM DTP traces. Since a single PIM source may produce signals that appear in both 1-Port and 2-Port DTP traces, or across multiple test rounds of the same trace configuration, it is necessary to identify and aggregate redundant detections into a single, uniquely classified PIM signal. For instance, a PIM source identified in a MIMO Branch A 1-Port DTP trace may also appear in a separate test round of the same measurement configuration, necessitating an approach that combines these instances into a unified representation of the same underlying intermodulation source to prevent duplicate classification.

To achieve this, an Internal PIM Signal Aggregation Window (WI) and an External PIM Aggregation Window (WE) are applied, where distance serves as the primary unit for aggregation. All Internal PIM signals within a predefined WI range are merged into a single PIM entry, while External PIM signals within a WE range are similarly aggregated. The width of these aggregation windows is user-defined and accounts for variations in measured PIM distances caused by differences in PIM signal path lengths between 1-Port and 2-Port DTP traces. Additionally, these windows allow for the characterization of PIM signal variability, particularly for non-stationary external PIM sources that may exhibit distance fluctuations across multiple test rounds. This method ensures that the Composite PIM Signal Table provides a precise, non-redundant dataset, optimizing PIM localization, classification, and mitigation strategies.

Continuing the example, set WI to 3 feet and WE to 10 feet, starting with the data in Table 5. Signals 1P2 and 2P1 are aggregated together and signals 2P2 & 1P3 are aggregated together. The result is the Aggregated PIM Signal Table:

**Table 6 - Aggregated PIM Signal Table**

| PIM Signal ID | PIM Origen Type | Min Distance | Max Distance | Mean Distance (ft) | Max Level (dBc) | Min level (dBc) | # Detection Opportunities | # Detections |
|---|---|---|---|---|---|---|---|---|
| 1 | Internal | 195 | 195 | 195 | -135 | -135 | 2 | 1 |
| 2 | External | 213 | 215 | 214 | -138 | -138 | 2 | 2 |
| 3 | External | 282 | 283 | 282.5 | -128 | -137 | 2 | 2 |
| 4 | Internal | 322 | 322 | 322 | -137 | -137 | 2 | 1 |
| 5 | External | 353 | 353 | 353 | -141 | -141 | 1 | 1 |

In an embodiment, PIM-related components are identified using the Aggregated PIM Signal Table in conjunction with antenna system distance-to-component data. A reference table containing the known distances from the test point to each system component is required to facilitate this analysis. For each Internal PIM signal recorded in the Aggregated PIM Signal Table, the system determines whether any RF component or junction falls within the PIM signal's measured distance, centered within a Component Identification Window (CI). If a component's distance is within the CI range, it is classified as a probable internal PIM source. Additionally, if a PIM signal distance falls between the endpoints of a feedline, that entire feedline is flagged as a potential source, ensuring that cable segments, junctions, or inline components contributing to intermodulation are properly considered.

Similarly, for External PIM classification, an Antenna Identification Window (AI) is applied to determine the most likely antenna receiving external PIM interference. Any antenna falling within the AI window distance of the measured external PIM signal is identified as a probable source of external PIM reception. If no antennas fall within this AI distance range, the closest antenna whose distance is less than or equal to the PIM signal distance is selected as the most likely antenna involved in external PIM generation. This structured approach ensures that both internal and external PIM sources are localized with high precision, allowing for efficient and targeted PIM mitigation strategies.

Passive Intermodulation (PIM) interference in MIMO systems can originate from both internal sources within the RF feed system and external sources caused by environmental reflections. Traditional PIM mitigation methods often struggle to differentiate between these sources, leading to inefficient troubleshooting and unnecessary component replacements. The disclosed methodology addresses this issue by utilizing a combination of 1-Port and 2-Port Distance-to-PIM (DTP) traces, enabling precise classification of internal vs. external PIM and identifying the most probable source of intermodulation. By applying an External PIM Distance Mask, Component Identification Windows (CI) for internal PIM, and Antenna Identification Windows (AI) for external PIM, the system aggregates PIM signals from multiple test rounds to construct a Composite PIM Signal Table. This table serves as the foundation for identifying PIM sources across multiple test scenarios, reducing misclassification, and improving the accuracy of mitigation strategies.

The proposed systems and methods utilize PIM detection, localization, and mitigation by dynamically adjusting the number of test rounds based on real-time variability analysis and ensuring that test case execution order minimizes PIM fluctuations between measurements. The use of internal and external PIM aggregation windows allows for precise identification of faulty components in the RF feed system and affected antennas receiving external PIM reflections. By consolidating redundant PIM detections, the methodology ensures that network operators target only actual sources of PIM, minimizing unnecessary interventions, reducing downtime, and improving overall network reliability and spectral efficiency. This structured, data-driven approach to PIM detection and mitigation provides a scalable solution for modern MIMO and DAS networks, ensuring optimal system performance with reduced operational costs and improved diagnostic precision.

Further aspects of the invention are provided by one or more of the following embodiments:
Embodiment 1. A method of passive intermodulation (PIM) detection in a radio frequency (RF) system, the method comprising: injecting, from each port of a two-port PIM analyzer, two test tones or a wideband modulated carrier signal into the system one port at a time; receiving, at each port, a response signal from the system in response to the test tones or wideband modulated carrier signal; injecting, from two ports of the two-port PIM analyzer, test tones or a wideband modulated carrier signal into the system; receiving, at the two ports, a response signal from the system in response to the test tones or wideband modulated carrier signal; and identifying one or more PIM sources based on the response signals.
Embodiment 2. The method of embodiment 1, wherein identifying the one or more PIM signals comprises comparing localized peaks of the response signals to one or more predefined PIM signal identification thresholds.
Embodiment 3. The method of any one or more of embodiments 1 or 2, wherein the test tones each comprise two distinct RF test signals at specified frequencies.
Embodiment 4. The method of any one or more of embodiments 1 to 3, wherein identifying the one or more PIM sources comprises: identifying PIM signals in the response signals that occur at distinct distances (DTP) within the system; grouping PIM signals that originate from similar distances; and associating grouped PIM signals to a common PIM source if the calculated DTP of the grouped PIM signals falls within a predefined distance difference threshold.
Embodiment 5. The method of any one or more of embodiments 1 to 4, further comprising analyzing sets of test cases to classify PIM sources as internal to the system or external to the system.
Embodiment 6. The method of any one or more of embodiments 1 to 7, further comprising referencing a table associated with each component within the system and identifying probable PIM sources by comparing a distance to PIM (DTP) value against a recorded electrical distance of the component.
Embodiment 7. A method of passive intermodulation (PIM) detection in a radio frequency (RF) system, the method comprising: operatively connecting a two-port analyzer to a multiple-input multiple-output (MIMO) system; configuring test parameters for testing the MIMO system using the two-port analyzer; testing the MIMO system by injecting a series of test tones into the MIMO system and receiving reflection signals from the MIMO system, wherein at least one of the series of test tones is a single-port test and at least one of the series of test tones is a two-port test; determining whether another round of testing is necessary; and upon no further round of testing being necessary, characterizing PIM signals received from the MIMO system to determine presence of a PIM source.
Embodiment 8. The method of embodiment 7, wherein configuring the test parameters comprises selecting between a sequence of test execution, a number of test rounds, a target confidence level for PIM detection, and MIMO paths and antenna systems to include in the test procedures.
Embodiment 9. The method of any one or more of embodiments 7 or 8, wherein a number of test rounds is dynamically determined in real time.
Embodiment 10. The method of any one or more of embodiments 7 to 9, further comprising determining whether the PIM source is external to the MIMO system or internal to the MIMO system.
Embodiment 11. The method of any one or more of embodiments 7 to 10, wherein characterizing the PIM signals comprises comparing localized peaks of signal reflections received during testing to a predefined PIM signal identification threshold.
Embodiment 12. The method of any one or more of embodiments 7 to 11, wherein the test tones each comprise two distinct RF test signals at specified frequencies.
Embodiment 13. A system for passive intermodulation (PIM) detection in a radio frequency (RF) system, the system comprising: a test analyzer comprising two ports each configured to be coupled to the RF system to permit injection of test tones into the RF system, wherein the test analyzer is configured to: inject, from each port of the test analyzer, a first set of test tones or a wideband modulated carrier signal into the RF system; receive, at each port, a response signal from the RF system in response to the first set of test tones or the wideband modulated carrier signal; inject, from two ports of the test analyzer, a second set of test tones or a wideband modulated carrier signal into the RF system; receive, at the two ports, a response signal from the RF system in response to the second set of test tones or the wideband modulated carrier signal; and identifying one or more PIM sources based on the response signals.
Embodiment 14. The system of embodiment 13, wherein identifying the one or more PIM signals comprises comparing localized peaks of the response signals to one or more predefined PIM signal identification thresholds.
Embodiment 15. The system of any one or more of embodiments 13 or 14, wherein the first and second sets of test tones each comprise two distinct RF test signals at specified frequencies.
Embodiment 16. The system of any one or more of embodiments 13 to 15, wherein identifying the one or more PIM sources comprises: identifying PIM signals in the response signals that occur at distinct distances (DTP) within the system; grouping PIM signals that originate from similar distances; and associating grouped PIM signals to a common PIM source if the calculated DTP of the grouped PIM signals falls within a predefined distance difference threshold.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A method (400) of passive intermodulation PIM detection in a radio frequency RF system, the method comprising:
injecting, from each port of a two-port PIM analyzer, two test tones or a wideband modulated carrier signal into the RF system one port at a time;
receiving, at each port, a response signal from the RF system in response to the test tones or wideband modulated carrier signal;
injecting, from two ports of the two-port PIM analyzer, two test tones or a wideband modulated carrier signal into the RF system;
receiving, at the two ports, a response signal from the RF system in response to the test tones or wideband modulated carrier signal; and
identifying one or more PIM sources based on the response signals.

2. A method (400) according to claim 1, wherein identifying the one or more PIM signals comprises comparing localized peaks of the first and second signals to one or more predefined PIM signal identification thresholds.

3. A method (400) according to claim 1 or claim 2, wherein the test tones each comprise two distinct RF test signals at specified frequencies.

4. A method (400) according to any preceding claim, wherein identifying the one or more PIM sources comprises:
identifying PIM signals in the signals that occur at distinct distances to PIM, DTP, within the RF system;
grouping PIM signals that originate from similar distances; and
associating grouped PIM signals to a common PIM source if the DTP of the grouped PIM signals falls within a predefined distance difference threshold.

5. A method (400) according to any preceding claim, further comprising analyzing sets of test cases to classify PIM sources as internal to the RF system or external to the RF system.

6. A method (400) according to claim 5, wherein analyzing the sets of test cases comprises identifying aspects of the response signals.

7. A method (400) according to any preceding claim, wherein the RF system comprises multiple branches, and wherein the test cases include a first injection of test tones into one of the two branches and a second injection of test tones into both of the two branches.

8. A method (400) according to any preceding claim, wherein injecting the test tones or wideband modulated carrier signal is performed from a same access point location.

9. A method (400) according to any preceding claim, wherein one-port injection establishes a baseline for internal and external PIM, and wherein two-port injection confirms and isolates external PIM sources.

10. A method (400) according to any preceding claim, further comprising referencing a table associated with each component within the RF system and identifying probable PIM sources by comparing a DTP value against a recorded electrical distance of the component.

11. A method (400) according to any preceding claim, wherein injecting the test tones and receiving the response signals comprises a first round of testing, wherein the method further comprises dynamically determining whether another round of testing is necessary.

12. A method (400) according to any preceding claim, wherein the RF system is a multiple-input multiple output MIMO system.

13. A method (400) according to claim 12, wherein, prior to injecting the test tones, the method comprises configuring test parameters including at least one of selecting between a sequence of test execution, a number of test rounds, a target confidence level for PIM detection, and MIMO paths and antenna systems to include in the test procedures.

14. A method (400) according to any preceding claim, wherein identifying the one or more PIM sources comprises determining a most likely source of external PIM interference.

15. A system for PIM detection in a RF system, the system comprising a test analyzer comprising two ports each configured to be coupled to the RF system to permit injection of test tones into the RF system, wherein the test analyzer is configured to perform the method of any preceding claim.
